# EUROPEAN PATENT SPECIFICATION

(11) **EP 3 611 066 B1**
(45) Date of publication and mention of the grant of the patent: **15.12.2021**
(21) Application number: 19187532.7
(22) Date of filing: 22.07.2019
(51) Int. Cl.: B60T 17/08

(54) **BRAKE CYLINDER DEVICE AND BRAKE DEVICE**
BREMSZYLINDERVORRICHTUNG UND BREMSVORRICHTUNG
DISPOSITIF DE CYLINDRE DE FREIN ET DISPOSITIF DE FREIN

(30) Priority: 23.07.2018 JP 2018137824
(43) Date of publication of application: 19.02.2020
(73) Proprietor: NABTESCO CORPORATION, Chiyoda-ku Tokyo 102-0093 (JP)
(72) Inventor: OHNO, Tomoya, Kobe-shi, Hyogo 651-2271 (JP)
(74) Representative: Grünecker Patent- und Rechtsanwälte PartG mbB

(56) References cited:
- EP-A1- 0 589 206
- EP-A1- 2 378 154
- EP-A1- 2 982 556
- DE-A1-102011 119 998
- FR-A1- 2 638 214
- US-A- 3 747 337
- US-A1- 2009 065 311

## Description

The present invention relates to a brake cylinder device and a brake device.

A brake cylinder device as described in the preamble of claim 1 is already known from US 2009/065311 A1. Conventionally, there is known a disc brake device that applies a braking force to a wheel of a railroad car by using a caliper device to press a brake shoe against a disc that rotates integrally with an axle supporting the wheel. Such a caliper device includes a cylinder device that operates the brake shoe by using a pressure fluid such as compressed air and a support arm that is connected to the cylinder device and rotates on a fulcrum shaft so that the brake shoe is moved toward and away from the disc by the cylinder device (see, for example, Japanese Laid-Open Patent Publication No. 2008-261439).

A caliper device of Japanese Laid-Open Patent Publication No. 2008-261439 includes a regular brake and a spring brake. The caliper device further includes a cut-off mechanism for releasing a braking state of the spring brake. The cut-off mechanism includes a fixing ring, a closing member, a fixing rod, a return spring, and an operation ring. The fixing ring is formed as a C-shaped ring having a slit. Head parts having wedge-shaped outer surfaces are provided respectively at both end portions of the fixing ring opposed to each other via the slit. The fixing ring is interposed in a flange-shaped portion of a second piston driven by the spring brake. The fixing ring is biased by an engagement member and the fixing rod so as to be decreased in diameter and thus is fitted in and engages with a circular groove formed at an outer periphery of a cylindrical member. The fixing ring engages with the circular groove in this manner, so that the cylindrical member of the second piston is fixed to and integrated with the second piston. The closing member has an open U-shaped cross section. The closing member has two inclined surfaces formed on an inner side thereof and configured to make contact with the wedge-shaped outer surfaces of the head parts of the fixing ring. The closing member is guided along a predetermined groove in the second piston so as to be movable in a radial direction thereof relative to the engagement member. Furthermore, the fixing rod is configured as a shaft-shaped stepped member having a wedge-shaped tapered surface formed on a distal end side thereof and is movable in a tangential direction in the second piston. Furthermore, the return spring is disposed between a stepped part and a spring seat of the fixing rod. The operation ring is attached to an end portion of the fixing rod opposite to the tapered surface thereof. With this configuration, the fixing rod is biased by the return spring so as to press the engagement member toward a center of the fixing ring in a radial direction thereof, and thus the fixing ring is held in a diameter-decreased state, so that the cylindrical member of the second piston is maintained in a state of being integrated with the second piston. On the other hand, when the operation ring is pulled in a direction away from the spring seat against a biasing force of the return spring, a pressed state of the closing member pressed by the fixing rod is gradually released, and thus the closing member is made movable toward an outer side of the fixing ring in the radial direction thereof while being in sliding contact with the tapered surface of the fixing rod. Thus, the fixing ring is increased in diameter, and the closing member is biased toward the outer side of the fixing ring in the radial direction thereof by the wedge-shaped outer surfaces of heads of the fixing ring, so that the fixing ring and the circular groove are disengaged from each other. Upon the fixing ring and the circular groove being disengaged from each other, in the second piston, the cylindrical member is decoupled from other members, and thus parts in the second piston other than the cylindrical member are made movable independently of the cylindrical member. Accordingly, when the operation ring is pulled, a braked state can be released even when the spring brake is in operation.

In the caliper device described in Japanese Laid-Open Patent Publication No. 2008-261439, the fixing rod of the cut-off mechanism is configured to move in the tangential direction of the fixing ring and thus requires a space for protruding outward from a brake cylinder device, in which regard, this caliper device has a room for improvement. The regular brake does not have to be included, and the spring brake is not limited to a configuration in which braking is released by manually operating the operation ring but may also adopt a configuration In which braking is mechanically and automatically released. The same problem, however, still exists in these cases. Furthermore, the same problem exists not only in the caliper device but also in a brake device that applies a braking force by using a brake cylinder device.

In view of the foregoing circumstances, one object of the present invention is to provide a brake cylinder device and a brake device that can be reduced in radial size while including a cut-off mechanism for cutting off an elastic force of a spring brake.

A brake cylinder device according to claim 1 solves the above-described problem includes a spring brake, a coupling part for coupling a transmission part to a piston of the spring brake, the transmission part being configured to transmit a force to the spring brake, and a switching part configured to rotate to disengage from the coupling part so as to switch a braking force of the spring brake to a non-transmission state. The brake cylinder device further comprises a regular brake. The transmission part transmits power of the piston of the spring brake to a piston of the regular brake,

According to the above-described configuration, the switching part is turned, and thus the switching part disengages form the coupling part so that a braking force of the spring brake is switched to the non-transmission state. Therefore, unlike in the conventional technique, it is not necessary to move the fixing rod in the tangential direction of the fixing ring, thus eliminating the need for a space for protruding outward from the brake cylinder device, so that the brake cylinder device can be reduced in radial size.

It is preferable that the above-described brake cylinder device further includes a biasing part for biasing the switching part so that the switching part engages with the coupling part so as to maintain the braking force of the spring brake in a transmission state.

According to the above-described configuration, the biasing part biases the switching part, and thus a braking force of the spring brake can be maintained in the transmission state.

In the above-described brake cylinder device, it is preferable that the switching part has a point of action, a fulcrum, and a point of force application, the point of action being positioned in a portion of the switching part at which the switching part engages with the coupling part, the fulcrum being positioned in a turning shaft of the switching part on which the switching part turns, and the point of force application being positioned in a portion of the switching part operated for turning, and a second distance between the fulcrum and the point of action be larger than a first distance between the fulcrum and the point of force application.

According to the above-described configuration, the second distance is longer than the first distance, and thus a displacement distance of the switching part between an engagement position and a non-engagement position can be made longer relative to an operation distance, so that the operation distance can be reduced,

In the above-described brake cylinder device, it is preferable that the point of force application be provided between the fulcrum and the point of action.

According to the above-described configuration, the point of force application is positioned between the fulcrum and the point of action, and thus while the second distance is longer than the first distance, the operation distance relative to the displacement distance can be reduced.

In the above-described brake cylinder device, it is preferable that the switching part includes an operation part to be operated, the tuning shaft be connected to the piston, and the operation part be provided so as to be movable in an axial direction of the turning shaft.

According to the above-described configuration, when the turning shaft moves together with the piston in the axial direction, it follows that the turning shaft moves relative to the operation part. Therefore, even when a wire or the like is connected to the operation part, the wire is prevented from being pulled as the piston moves.

Another brake cylinder device for solving the above-described problem is defined according to claim 6 and includes a spring brake, a coupling part for coupling a transmission part to a piston of the spring brake, the transmission part being configured to transmit a force to the spring brake, a switching part configured to move in a radial direction of the piston to disengage from the coupling part so as to switch a braking force of the spring brake to a non-transmission state, and a drive part configured to move in an axial direction parallel to a moving direction of the piston so as to make contact with the switching part and move the switching part.

According to the above-described configuration, the drive part that moves in the moving direction of the piston makes contact with the switching part and moves the switching part in the radial direction of the piston, and thus the switching part disengages from the coupling part so that a braking force of the spring brake is switched to the non-transmission state. Therefore, unlike in the conventional technique, it is not necessary to move the fixing rod in the tangential direction of the fixing ring, thus eliminating the need for a space for protruding outward from the brake cylinder device, so that the brake cylinder device can be reduced in radial size.

It is preferable that the above-described brake cylinder device further includes a biasing part for biasing the drive part so that the switching part engages with the coupling part so as to maintain the braking force of the spring brake in a transmission state.

According to the above-described configuration, the biasing part biases the switching part, and thus a braking force of the spring brake can be maintained in the transmission state.

A brake device for solving the above-described problem is a brake device configured to generate a braking force by pressing a brake friction member to a pressed member, the brake device including the above-described brake cylinder device, the brake friction member being driven by the brake cylinder device.

According to the above-described configuration, the brake cylinder device reduced in size is included, and thus the brake device can be reduced in size.

According to the present invention, it is possible to achieve a reduction in radial size while including a cut-off mechanism for cutting off an elastic force of a spring brake.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a right side view showing a configuration of a first embodiment of a brake device;
Fig. 2 is a left side view showing the configuration of the brake device according to the first embodiment;
Fig. 3 is a top view showing the configuration of the brake device according to the first embodiment;
Fig. 4 is a sectional view showing a configuration of a brake cylinder device according to the first embodiment;
Fig. 5 is a partially broken view showing the configuration of the brake cylinder device according to the first embodiment;
Fig. 6 is a top sectional view showing an engaged state of a cut-off mechanism of the brake cylinder device according to the first embodiment;
Fig. 7 is a top sectional view showing a non-engaged state of the cut-off mechanism of the brake cylinder device according to the first embodiment;
Fig. 8 is a perspective view showing a configuration of a second embodiment of a brake cylinder device;
Fig. 9 is a partially broken enlarged view showing an engaged state of a cut-off mechanism of the brake cylinder device according to the second embodiment;
Fig. 10 is an enlarged sectional view showing the engaged state of the cut-off mechanism of the brake cylinder device according to the second embodiment;
Fig. 11 is a partially broken enlarged view showing a non-engaged state of the cut-off mechanism of the brake cylinder device according to the second embodiment; and
Fig. 12 is an enlarged sectional view showing the non-engaged state of the cut-off mechanism of the brake cylinder device according to the second embodiment.

### First Embodiment

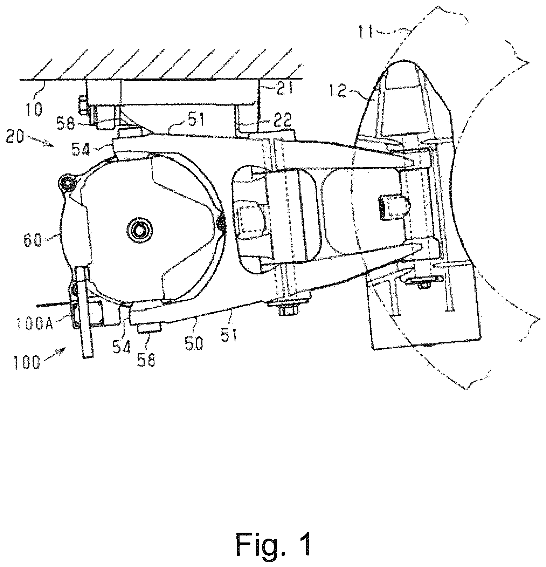

With reference to Fig. 1 to Fig. 5, the following describes a first embodiment of a brake cylinder device and a brake device.

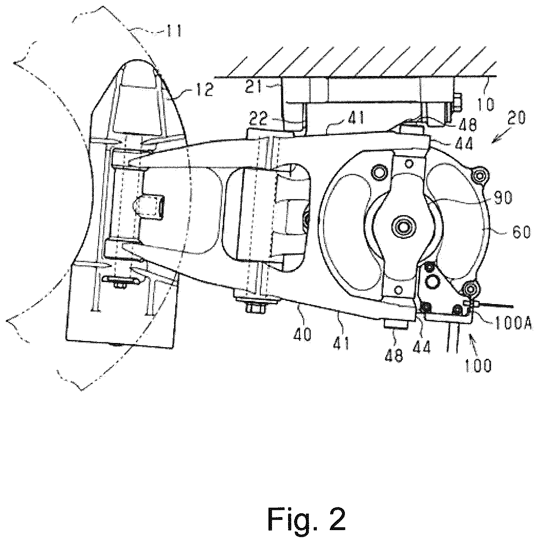

As shown in Fig. 1 and Fig. 2, a disc brake device is mounted to a truck 10 of a railroad car and applies a braking force to a wheel of the truck 10 by using a caliper device 20 to press band-shaped brake shoes 12 against a disc-shaped disc 11 that rotates integrally with an axle for rotating the wheel. That is, the caliper device 20 corresponds to the brake device.

The caliper device 20 includes a bracket 21 mounted to the truck 10, a coupling member 22 swingably coupled to the bracket 21, and a pair of left and right arms 40 and 50 supported to the coupling member 22. Furthermore, the caliper device 20 is supported to proximal end portions of the pair of left and right arms 40 and 50 and drives the left arm 40 and the right arm 50 through supply and discharge of compressed air.

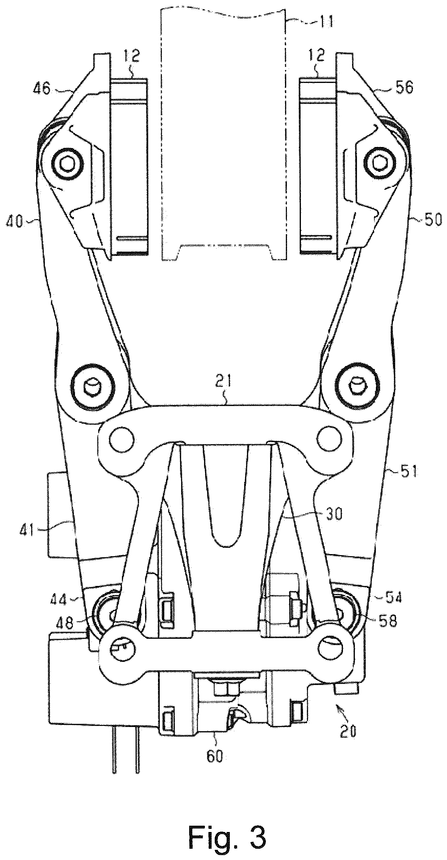

As shown in Fig. 3, the left arm 40 and the right arm 50 are arranged on both sides of the disc 11 in a thickness direction of the disc 11, respectively. A brake shoe mounting member 46 and a brake shoe mounting member 56 are each disposed so as to be opposed to the disc 11 in the thickness direction of the disc 11. The brake shoes 12 are mounted to the brake shoe mounting member 46 and the brake shoe mounting member 56, respectively.

As shown in Fig. 1 and Fig. 2, on a proximal end side of the left arm 40, a pair of left extension pieces 41 are provided to extend so as to be spaced from and opposed to each other. A brake cylinder device 60 is rotatably mounted to proximal end portions 44 of the left extension pieces 41 of the left arm 40 via left fixing members 48.

On a proximal end side of the right arm 50, a pair of right extension pieces 51 are provided to extend so as to be spaced from and opposed to each other. The brake cylinder device 60 is rotatably mounted to proximal end portions 54 of the right extension pieces 51 of the right arm 50 via right fixing members 58. The proximal end portions 44 of the left extension pieces 41 of the left arm 40 are mounted to a connection member 90 provided in the brake cylinder device 60. The connection member 90 extends between the left extension pieces 41 of the left arm 40. Specifically, both end portions of the connection member 90 are rotatably connected to the proximal end portions 44 of the left arm 40, respectively. Therefore, the brake cylinder device 60 is supported between the proximal end side of the left arm 40 and the proximal end side of the right arm 50.

The brake cylinder device 60 applies a drive force to the proximal end portions 44 of the left arm 40 and the proximal end portions 54 of the right arm 50 so that the proximal end sides (each of the left fixing members 48 and a corresponding one of the right fixing members 58) move away from each other based on compressed air supplied from an unshown air supply/discharge part. Furthermore, the brake cylinder device 60 includes a restoration spring (not shown) for applying, to the proximal end portions 44 and 54, a force for moving the brake shoes 12 away from the disc 11. In a state where the brake shoes 12 sandwich the disc 11 therebetween, compressed air supplied from the air supply/discharge part is discharged, and thus a force exerted by the restoration spring becomes larger than a force applied to the proximal end portions 44 and 54 by the brake cylinder device 60, so that the brake shoes 12 move away from the disc 11.

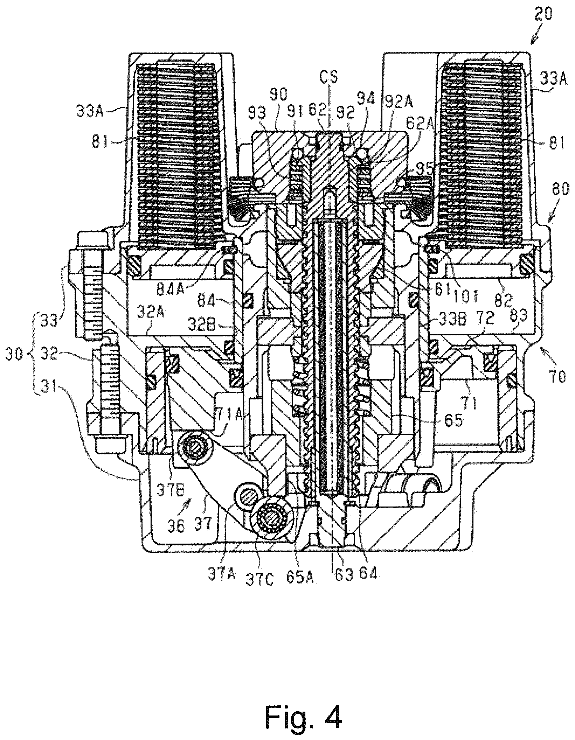

Next, with reference to Fig. 4 to Fig. 7, a description is given of the brake cylinder device 60.

As shown in Fig. 4, a distal end portion of a spindle 62 as a braking force transmission rod is connected to a center portion of the connection member 90. The spindle 62 is mounted to the connection member 90 so as to be rotatable about an axis CS. Specifically, a fitting hole 91 is provided in the connection member 90 at the center portion thereof. An adaptor 92 having a flange 92A is mounted to a connection part 62A of the spindle 62. The connection part 62A of the spindle 62 and the adaptor 92 are housed in the fitting hole 91 of the connection member 90. A rolling member 94 is disposed between a bottom surface of the fitting hole 91 of the connection member 90 and the flange 92A of the adaptor 92. The flange 92A of the adaptor 92 is pressed against the bottom surface of the fitting hole 91 of the connection member 90 by a biasing member 93. An end portion of the biasing member 93 on the other side (an end portion thereof opposite to a side on which the biasing member 93 presses an end surface of the fitting hole 91) is in contact with a catch 95 mounted to an opening portion of the fitting hole 91.

The spindle 62 is movable between a brake position at which a braking force is transmittable to the caliper device 20 and a non-brake position at which the braking force is non-transmittable thereto. In the brake cylinder device 60, an advancing and retracting motion of the spindle 62 causes the brake cylinder device 60 to move toward and away from the connection member 90, thus causing each of the proximal end portions 44 and a corresponding one of the proximal end portions 54 of the pair of left and right arms 40 and 50 to move toward and away from each other.

Furthermore, the constituent elements of the brake cylinder device 60 are made of metal unless otherwise particularly specified. For example, the constituent elements of the brake cylinder device 60 are made of iron, an iron alloy, aluminum, an aluminum alloy, or the like. Some of the constituent elements may have a resin layer. For example, an after-mentioned cylinder 30 may have a coated outer surface.

The brake cylinder device 60 includes a guide tube 65 that moves by power of the brake cylinder device 60. The spindle 62 is inserted in the guide tube 65. A clutch nut 61 is interposed between the guide tube 65 and the spindle 62. The clutch nut 61 transmits power between the guide tube 65 and the spindle 62.

The brake cylinder device 60 includes a regular brake 70 that biases the spindle 62 to the brake position by a pressure fluid supplied thereto and a spring brake 80 that biases the spindle 62 to the brake position by an elastic force of a spring.

The regular brake 70 includes an annular first piston 71 provided on an outer periphery of the guide tube 65 and a first pressure chamber 72. The first pressure chamber 72 is a circular space that, when supplied with compressed air as a pressure fluid, biases the first piston 71 toward the brake position. Movement of the first piston 71 causes the spindle 62 to move between the brake position and the non-brake position.

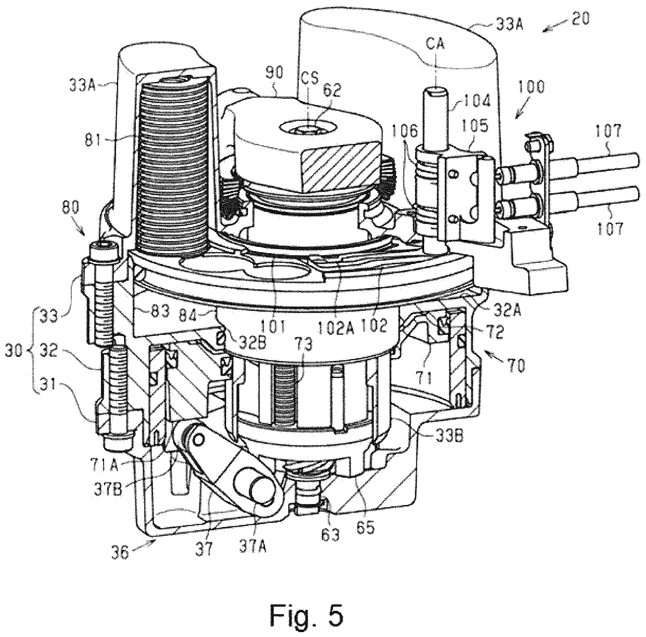

As shown in Fig. 5, a first spring 73 that biases the spindle 62 to the non-brake position is provided on the outer periphery of the guide tube 65. An elastic force of the first spring 73 is transmitted to the first piston 71 via the guide tube 65 and a force-multiplication mechanism 36. The first piston 71 is biased to the non-brake position by the first spring 73. That is, the first spring 73 is a component of the regular brake 70.

As shown in Fig. 4, an elastic force of the first spring 73 and a biasing force exerted by a pressure fluid supplied to the first pressure chamber 72 act on the first piston 71 in opposite directions. When a pressure fluid is supplied to the first pressure chamber 72, the regular brake 70 biases the first piston 71 toward the brake position by an elastic force acting on the first piston 71 against an elastic force of the first spring 73.

The spring brake 80 includes at least one second spring 81 and an annular second piston 82 on which an elastic force of the at least one second spring 81 acts. The spring brake 80 also includes a second pressure chamber 83. The second pressure chamber 83 is a circular space that, when supplied with compressed air as a pressure fluid, acts on the second piston 82 in an opposite direction to an acting direction of an elastic force of the at least one second spring 81.

As shown in Fig. 4 and Fig. 5, the brake cylinder device 60 includes the force-multiplication mechanism 36 that multiplies power of the regular brake 70 and the spring brake 80 and a cylinder 30 housing the regular brake 70, the spring brake 80, and the force-multiplication mechanism 36.

The force-multiplication mechanism 36 changes an acting direction of an elastic force of the first piston 71 to an opposite direction and transmits the elastic force thus changed in acting direction, while multiplying it, to the guide tube 65. The force-multiplication mechanism 36 includes one or more force-multiplication levers 37, a support shaft 37A provided at a center of each of the one or more force-multiplication levers 37, and a first roller 37B and a second roller 37C provided at one and the other end portions thereof via the support shaft 37A, respectively. The first roller 37B makes contact with a roller receiving part 71A of the first piston 71. The second roller 37C makes contact with a roller receiving part 65A of the guide tube 65. A distance from the support shaft 37A to the first roller 37B is longer than a distance from the support shaft 37A to the second roller 37C. By this configuration, the force-multiplication mechanism 36 multiplies a force applied to the first roller 37B and outputs the thus multiplied force from the second roller 37C. The force-multiplication mechanism 36 functions as a mediating mechanism.

The cylinder 30 includes a bottomed cylindrical first cylinder 31, a cylindrical second cylinder 32 fixed to the first cylinder 31, and a third cylinder 33 that closes an opening portion of the second cylinder 32. The force-multiplication mechanism 36 is housed in the first cylinder 31. The second cylinder 32 has a partition wall 32A separating the first pressure chamber 72 from the second pressure chamber 83 in an extending direction of the second cylinder 32 and houses the first piston 71 and the second piston 82. The third cylinder 33 includes a spring housing part 33A housing the at least one second spring 81 and a cylindrical part 33B in which the guide tube 65 is inserted. A pair of spring housing parts 33A are provided so as to sandwich the connection member 90 therebetween. In each of the spring housing parts 33A, four coil springs are housed as each of the at least one second spring 81 and bias the second piston 82. A distal end of the cylindrical part 33B protrudes into the first cylinder 31. A through hole 32B is provided at a center of the partition wall 32A, and the cylindrical part 33B of the third cylinder 33 is inserted therein.

The first pressure chamber 72 is formed by an inner wall of the second cylinder 32, the partition wall 32A, the cylindrical part 33B of the third cylinder 33, and the first piston 71. Furthermore, the second pressure chamber 83 is formed by the inner wall of the second cylinder 32, the partition wall 32A, the cylindrical part 33B of the third cylinder 33, and the second piston 82.

A cylindrical transmission member 84 is provided between the second piston 82 and the cylindrical part 33B of the third cylinder 33. The transmission member 84 transmits power of the second piston 82 to the first piston 71. The transmission member 84 corresponds to the transmission part. A cut-off mechanism 100 for cutting off transmission of an elastic force between the second piston 82 and the transmission member 84 is provided between the second piston 82 and the transmission member 84. A proximal end of the transmission member 84 is coupled to the second piston 82 via the cut-off mechanism 100. The cut-off mechanism 100 can switch between a coupled state in which transmission of an elastic force between the second piston 82 and the transmission member 84 is enabled and a cut-off state in which transmission of an elastic force between the second piston 82 and the transmission member 84 is cut off. A distal end of the transmission member 84 is in contact with the first piston 71. Therefore, in a case where the second piston 82 and the transmission member 84 are in the coupled state, when the second piston 82 moves from the non-brake position to the brake position, the first piston 71 also moves from the non-brake position to the brake position. In a state where compressed air is supplied to the second pressure chamber 83 and thus the second piston 82 is at the non-brake position, the first piston 71 moves without being influenced by the second piston 82. An elastic force acting on the second piston 82 is transmitted from the second piston 82 to the spindle 62 by the transmission member 84, the first piston 71, the force-multiplication mechanism 36, and the guide tube 65. Therefore, when compressed air is discharged from the second pressure chamber 83, the spindle 62 is biased toward the brake position by an elastic force of the at least one second spring 81 transmitted via the transmission member 84, the first piston 71, the force-multiplication mechanism 36, and the guide tube 65.

The spindle 62 is supported by a shaft member 63. The shaft member 63 is fixed to a center of the first cylinder 31. The shaft member 63 is formed in a cylindrical shape and is open on one side near the connection member 90. A spring 64 is housed in the shaft member 63. The spring 64 is formed of a coil spring. The spindle 62 is movable in an axial direction relative to the shaft member 63 and is prevented from rotating relative to the shaft member 63. The spindle 62 is biased toward the connection member 90 by the spring 64. In Fig. 5, in order to show the cut-off mechanism 100, part of the at least one second spring 81, part of the spring housing parts 33A of the third cylinder 33, and a case 100A of the cut-off mechanism 100 are omitted.

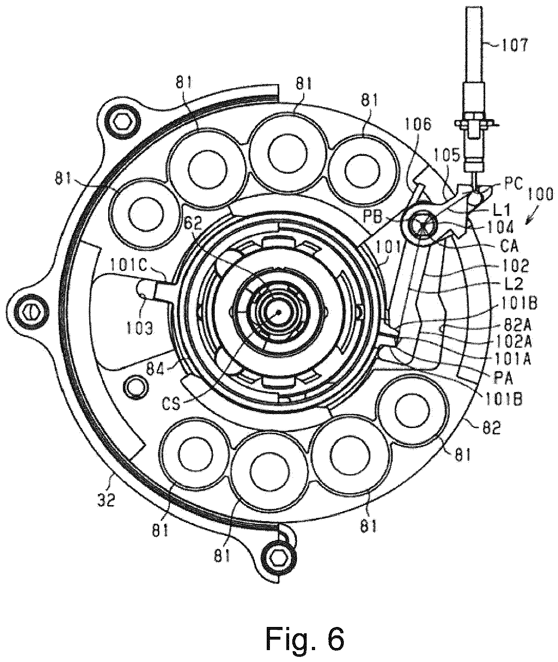

As shown in Fig. 6, the cut-off mechanism 100 includes a ring 101 having a slit 101Aand a switching member 102 engageable with the ring 101. The ring 101 has the slit 101A. Wedge-shaped engaged parts 101B are provided respectively at both end portions of the ring 101 forming the slit 101A, the engaged parts 101B protruding in a radial direction of the ring 101. Furthermore, a restriction part 101C is provided at a portion of the ring 101 on an opposite side to the portions thereof at which the engaged parts 101B are provided. The restriction part 101C restricts rotation of the ring 101 in a circumferential direction thereof. The restriction part 101C of the ring 101 is fitted in a restriction groove 103 formed in the second piston 82, and thus the ring 101 is prevented from rotating relative to the second piston 82. The restriction part 101C and the restriction groove 103 function as a rotation restricting part. The ring 101 is mounted to an inner wall of the second piston 82. The ring 101 functions as a coupling part and couples the transmission member 84 that transmits a force to the spring brake 80 to the second piston 82. The ring 101 has an engagement position at which the ring 101 engages with the second piston 82 and a non-engagement position at which the ring 101 does not engage therewith. The switching member 102 functions as a switching part and switches between the engagement position and the non-engagement position of the ring 101. At a distal end portion of the switching member 102, there is provided a U-shaped engagement part 102A having inclined surfaces that engage with respective inclined surfaces of the engaged parts 101B of the ring 101. A housing groove 82A is provided on a surface of the second piston 82 near the at least one second spring 81. The switching member 102 is mounted to the housing groove 82A so as to be turnable about an axis CA parallel to the axis CS of the spindle 62. The switching member 102 is installed within a projection plane of the second piston 82 in an axial direction thereof. A circular groove 84A is formed on an outer periphery of the transmission member 84, the ring 101 being fitted in the circular groove 84A (see Fig. 4). The switching member 102 turns about the axis CA and thus is displaced between a position at which it engages with the ring 101 and a position at which it disengages from the ring 101. When the ring 101 engages with the switching member 102, a clearance of the slit 101A is narrowed, so that the ring 101 is fitted in the circular groove 84A of the transmission member 84. In a state where the ring 101 is fitted in the circular groove 84A of the transmission member 84, the second piston 82 and the transmission member 84 are displaced integrally with each other. On the other hand, when the ring 101 disengages from the switching member 102, the clearance of the slit 101A is widened, so that fitting between the ring 101 and the circular groove 84A of the transmission member 84 is released. In a state where the ring 101 is not fitted in the circular groove 84A of the transmission member 84, the second piston 82 is decoupled from the transmission member 84, and thus the second piston 82 and the transmission member 84 move independently of each other. While the ring 101 is composed of two semicircular members, the ring 101 may also be formed of a C-shaped member having the restriction part 101C formed integrally therewith.

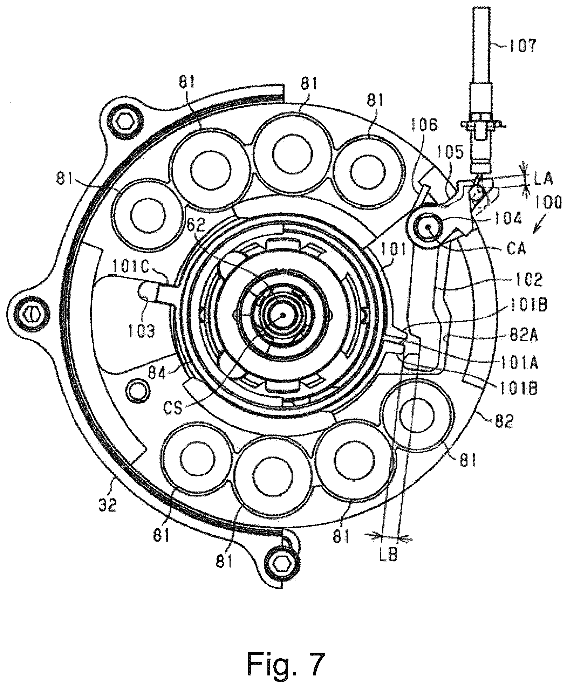

As shown in Fig. 5 and Fig. 6, the cut-off mechanism 100 includes a turning shaft 104 that turns together with the switching member 102 about the axis CA and an operation part 105 that rotates the turning shaft 104. The turning shaft 104 is rotatably provided in the second piston 82. The operation part 105, on the other hand, does not turn relative to the turning shaft 104 and is movable relative to the turning shaft 104 in an axial direction thereof. That is, a portion of the turning shaft 104 around which the operation part 105 is inserted is formed not in a circular shape in cross section but in an elliptic shape or the like in cross section. The operation part 105 is provided with a biasing member 106 that biases the operation part 105 in such a direction that the switching member 102 engages with the ring 101. The biasing member 106 is a spring functioning as a biasing part. When the operation part 105 is operated to such a position that the switching member 102 does not engage with the ring 101, by an elastic force of the biasing member 106, the operation part 105 is biased to such a position that the switching member 102 engages with the ring 101. The switching member 102 and the operation part 105 turn integrally with the turning shaft 104. Two wires 107 for operating the operation part 105 are attached to the operation part 105. The engagement part 102A that engages with the ring 101 serves as a point of action PA. The turning shaft 104 serves as a fulcrum PB. A connection part between the operation part 105 operated to perform turning and the wires 107 serves as a point of force application PC. A distance between the fulcrum PB and the point of force application PC is referred to as a first distance L1. A distance between the fulcrum PB and the point of action PA is referred to as a second distance L2. The second distance L2 is larger than the first distance L1. Therefore, a displacement distance LB of the switching member 102 is larger than an operation distance LA of the operation part 105 (see Fig. 7).

The wires 107 are pulled to rotate the operation part 105 so that the switching member 102 is displaced to a state of not engaging with the ring 101. When the wires 107 are released from being pulled, by an elastic force of the biasing member 106, the switching member 102 is displaced to a state of engaging with the ring 101. The wires 107 may be directly pulled by hand or pulled mechanically. Since the operation part 105 moves relative to the turning shaft 104 in the axial direction thereof as described above, even when the turning shaft 104 moves in the axial direction as the second piston 82 moves, there occurs no change in respective positions of the operation part 105 and the wires 107. Therefore, in the cut-off mechanism 100, it is suppressed that the wires 107 are sagged or pulled by movement of the second piston 82. The operation part 105 may be directly operated without using the wires 107.

Next, a description is given of an operation of the brake cylinder device 60 configured as above.

As shown in Fig. 4, in the spring brake 80, when compressed air is supplied to the second pressure chamber 83 and thus the second piston 82 moves toward the third cylinder 33, the transmission member 84 moves together with the second piston 82 toward the third cylinder 33, thus compressing the at least one second spring 81, so that an elastic force of the at least one second spring 81 is no longer transmitted to the spindle 62. In this state, braking by the regular brake 70 is enabled.

In the regular brake 70, when compressed air is supplied to the first pressure chamber 72 and thus the first piston 71 moves toward the force-multiplication mechanism 36, the first piston 71 presses the first roller 37B of each of the one or more force-multiplication levers 37 toward the first cylinder 31. This causes each of the one or more force-multiplication levers 37 to rotate about the support shaft 37A, and thus the second roller 37C presses the guide tube 65 away from the first cylinder 31. Being pressed by the one or more force-multiplication levers 37, the guide tube 65 moves away from the first cylinder 31 against an elastic force of the first spring 73. Power of the guide tube 65 in a direction away from the first cylinder 31 is transmitted to the spindle 62 via the clutch nut 61, and thus the spindle 62 moves together with the guide tube 65 away from the first cylinder 31. Then, each of the proximal end portions 44 and a corresponding one of the proximal end portions 54 of the pair of arms 40 and 50 move away from each other, and the brake shoes 12 of the pair of arms 40 and 50 move toward each other to sandwich the disc 11 therebetween. Thus, rotation of the wheel is braked.

When compressed air is discharged from the first pressure chamber 72, an elastic force of the one or more force-multiplication levers 37 pressing the guide tube 65 is weakened, and thus the guide tube 65 moves toward the first cylinder 31 by an elastic force of the first spring 73. Power of the guide tube 65 in a direction toward the first cylinder 31 is transmitted to the spindle 62 via the clutch nut 61, and thus the spindle 62 moves together with the guide tube 65 toward the first cylinder 31. Then, each of the proximal end portions 44 and a corresponding one of the proximal end portions 54 of the pair of arms 40 and 50 move toward each other, and the brake shoes 12 of the pair of arms 40 and 50 move away from each other to be away from the disc 11. Thus, braking of rotation of the wheel is released.

On the other hand, in the spring brake 80, when compressed air supplied to the second pressure chamber 83 is discharged and thus the second piston 82 moves toward the first cylinder 31, the at least one second spring 81 expands, and an elastic force of the at least one second spring 81 is transmitted to the spindle 62. That is, when the at least one second spring 81 expands, the second piston 82 moves together with the transmission member 84 toward the first cylinder 31 and makes contact with the partition wall 32A, and the transmission member 84 presses the first piston 71 toward the force-multiplication mechanism 36. When the first piston 71 moves toward the force-multiplication mechanism 36, the first piston 71 presses the first roller 37B of each of the one or more force-multiplication levers 37 toward the first cylinder 31. This causes each of the one or more force-multiplication levers 37 to rotate about the support shaft 37A, and thus the second roller 37C presses the guide tube 65 away from the first cylinder 31. Being pressed by the one or more force-multiplication levers 37, the guide tube 65 moves away from the first cylinder 31 against an elastic force of the first spring 73. Power of the guide tube 65 in a direction away from the first cylinder 31 is transmitted to the spindle 62 via the clutch nut 61, and thus the spindle 62 moves together with the guide tube 65 away from the first cylinder 31. Then, each of the proximal end portions 44 and a corresponding one of the proximal end portions 54 of the pair of arms 40 and 50 move away from each other, and the brake shoes 12 of the pair of arms 40 and 50 move toward each other to sandwich the disc 11 therebetween. Thus, rotation of the wheel is braked.

In a state where rotation of the wheel is braked by the spring brake 80 as described above, when compressed air for releasing braking of the rotation of the wheel cannot be supplied to the second pressure chamber 83, transmission of an elastic force to the spindle 62 by the spring brake 80 is cut off by the cut-off mechanism 100. That is, as shown in Fig. 7, when at least one of the wires 107 attached to the operation part 105 is pulled, the operation part 105 rotates in a releasing direction. When the operation part 105 rotates, the turning shaft 104 and the switching member 102 also rotate in the releasing direction. When the switching member 102 rotates in the releasing direction, the engagement part 102A of the switching member 102 no longer engages with the engaged parts 101B of the ring 101, and thus the ring 101 is increased in diameter to decouple the second piston 82 from the transmission member 84, so that an elastic force is no longer transmitted to the transmission member 84. Then, the guide tube 65 moves toward the first cylinder 31 by an elastic force of the first spring 73. Power of the guide tube 65 in a direction toward the first cylinder 31 is transmitted to the spindle 62 via the clutch nut 61, and thus the spindle 62 moves together with the guide tube 65 toward the first cylinder 31. Then, each of the proximal end portions 44 and a corresponding one of the proximal end portions 54 of the pair of arms 40 and 50 move toward each other, and the brake shoes 12 of the pair of arms 40 and 50 move away from each other to be away from the disc 11. Thus, braking of rotation of the wheel is released.

To return to a normal state after releasing braking of rotation of the wheel by the cut-off mechanism 100, compressed air is supplied to the second pressure chamber 83 so that the second piston 82 moves toward the third cylinder 33. At this time, the ring 101 is biased in such a direction that the switching member 102 engages therewith and thus is biased in a diameter-decreasing direction. As shown in Fig. 6, when the second piston 82 moves toward the third cylinder 33, the ring 101 mounted to the second piston 82 engages with the circular groove 84A of the transmission member 84, and thus the second piston 82 and the transmission member 84 move integrally with each other.

As described above, according to this embodiment, the following effects can be obtained.
(1) The switching member 102 is rotated, and thus the switching member 102 disengages from the ring 101 so that a braking force of the spring brake 80 is switched to a non-transmission state. Therefore, unlike in the conventional technique, it is not necessary to move the fixing rod in the tangential direction of the fixing ring, thus eliminating the need for a space for protruding outward from the brake cylinder device 60, so that the brake cylinder device 60 can be reduced in radial size.
(2) The biasing member 106 biases the switching part 102, and thus a braking force of the spring brake 80 can be maintained in a transmission state.
(3) The second distance L2 between the fulcrum PB and the point of action PA is longer than the first distance L1 between the fulcrum PB and the point of force application PC, and thus the displacement distance LB of the switching member 102 between the engagement position and the non-engagement position can be made longer relative to the operation distance LA, so that the operation distance LA can be reduced.
(4) When the turning shaft 104 moves together with the second piston 82 in the axial direction, it follows that the turning shaft 104 moves relative to the operation part 105. Therefore, the wires 107 connected to the operation part 105 are prevented from being pulled as the piston 82 moves.
(5) The biasing member 106 biases the operation part 105 in such a direction that the switching member 102 engages with the ring 101, and thus when the operation part 105 is not operated, the switching member 102 can be maintained at such a position as to engage with the ring 101 by the operation part 105.

### Second Embodiment

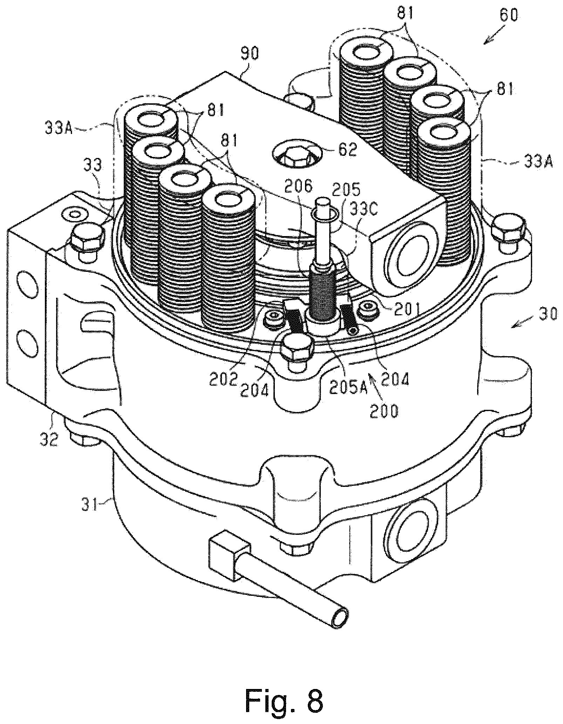

With reference to Fig. 8 to Fig. 12, the following describes a second embodiment of the brake cylinder device and the brake device. A brake cylinder device and a brake device according to this embodiment is different from the foregoing first embodiment in structure of the cut-off mechanism. The following description will be focused on the difference from the first embodiment.

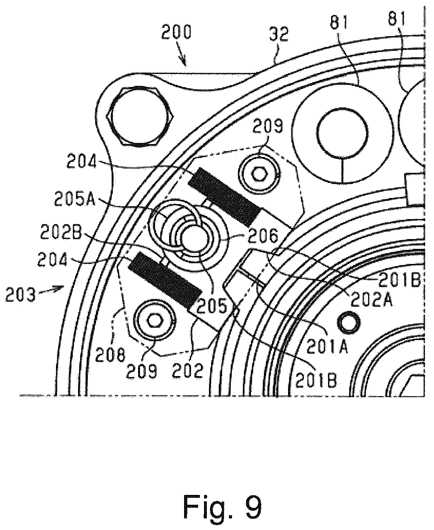

As shown in Fig. 8 and Fig. 9, similarly to the first embodiment, a cut-off mechanism 200 includes a ring 201 having a slit 201A, a switching member 202 engageable with the ring 201, and a drive member 203 that moves the switching member 202. The ring 201 functions as a coupling part for coupling a transmission member 84 that transmits a force to a spring brake 80 to a second piston 82. The ring 201 is mounted to the second piston 82. The switching member 202 and the drive member 203 are installed within a projection plane of the second piston 82 in an axial direction thereof. The cut-off mechanism 200 is housed in a housing part 33C provided so as to be continuous with a spring housing part 33Aof a third cylinder 33. The ring 201 functions as the coupling part, the switching member 202 functions as a switching part, and the drive member 203 functions as a drive part.

Wedge-shaped engaged parts 201B are provided respectively at both end portions of the ring 201 forming the slit 201A, the engaged parts 201B protruding in a radial direction of the ring 201. The ring 201 is mounted to an inner wall of the second piston 82. The switching member 202 is provided in the second piston 82. At a distal end portion of the switching member 202, there is provided a U-shaped engagement part 202A having inclined surfaces that engage with respective inclined surfaces of the engaged parts 201B of the ring 201. When the ring 201 engages with the switching member 202, a clearance of the slit 201A is narrowed, so that the ring 201 is fitted in the transmission member 84. In a state where the ring 201 is fitted in a circular groove 84A of the transmission member 84, the second piston 82 and the transmission member 84 are displaced integrally with each other. On the other hand, when the ring 201 disengages from the switching member 202, the clearance of the slit 201A is widened, so that fitting between the ring 201 and the transmission member 84 is released. In a state where the ring 201 is not fitted in the circular groove 84A of the transmission member 84, the second piston 82 is decoupled from the transmission member 84, and thus the second piston 82 and the transmission member 84 move independently of each other. The switching member 202 moves in a radial direction of the ring 201 and thus is displaced between a position at which it engages with the ring 201 and a position at which it disengages from the ring 201. The cut-off mechanism 200 includes a biasing member 204 that biases the switching member 202 away from the ring 201. The switching member 202 and the biasing member 204 are supported to the second piston 82 by a support cover 208. The support cover 208 is fixed using two screws 209. The switching member 202 and the biasing member 204 are displaced within the support cover 208.

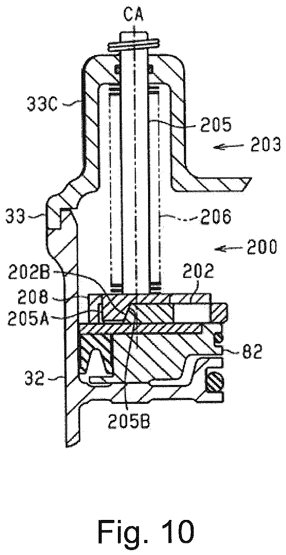

As shown in Fig. 10, the drive member 203 moves in a direction parallel to an axis CS of a spindle 62 and thus displaces the switching member 202 between the position at which it engages with the ring 201 and the position at which it disengages from the ring 201. Specifically, the drive member 203 includes a rod-shaped operation part 205 and a contact part 205A that is provided at a proximal end of the operation part 205 and makes contact with the switching member 202. The operation part 205 is provided with a biasing member 206 that biases the contact part 205A toward the switching member 202 in an axial direction of the operation part 205. The biasing member 206 is mounted around an outer periphery of the operation part 205 and is installed between the contact part 205A and an inner wall of the housing part 33C so that the contact part 205A is in contact with the switching member 202. A distal end of the operation part 205 protrudes from the third cylinder 33 in the direction parallel to the axis CS of the spindle 62. The distal end of the operation part 205 is pulled, and thus transmission of an elastic force between the second piston 82 and the transmission member 84 can be cut off. A rear surface 202B of the switching member 202 distant from the ring 201 is an inclined surface inclined toward the second cylinder 32 as it extends toward the second piston 82. The contact part 205A is disc-shaped and has an inclined surface 205B that makes contact with the rear surface 202B of the switching member 202. The inclined surface 205B corresponds to a contact surface. By the inclined surface 205B of the contact part 205A and the rear surface 202B of the switching member 202, movement of the drive member 203 in an axial direction thereof is changed to movement of the switching member 202 in the radial direction. The biasing member 206 functions as a biasing part.

The second piston 82 is displaced between a brake position and a non-brake position in an axial direction of the spindle 62, and thus the operation part 205 and the contact part 205A move together with the second piston 82 while being biased by the biasing member 206.

Next, with reference to Fig. 9 to Fig. 12, a description is given of an operation of the cut-off mechanism 200. Except for the cut-off mechanism 200, a brake cylinder device 60 operates in the same manner as in the first embodiment, and thus a duplicate description of the operation is omitted.

As shown in Fig. 9 and Fig. 10, when the contact part 205A moves toward the switching member 202 while the inclined surface 205B of the contact part 205A is in contact with the rear surface 202B of the switching member 202, the switching member 202 is displaced toward the ring 201 by the inclined surface 205B of the contact part 205A. When the switching member 202 is displaced toward the ring 201, the ring 201 engages with the switching member 202, and thus the clearance of the slit 201A is narrowed, so that the ring 201 is fitted in the transmission member 84. In this state, the second piston 82 and the transmission member 84 move integrally with each other.

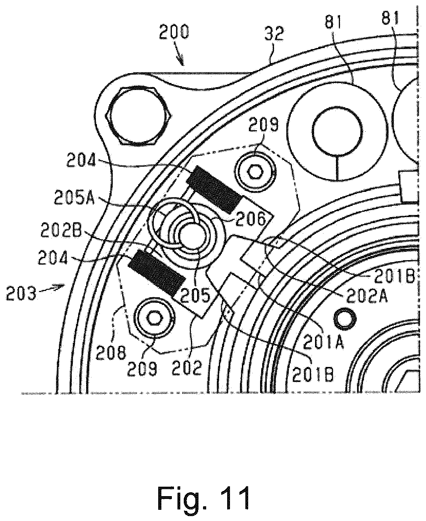

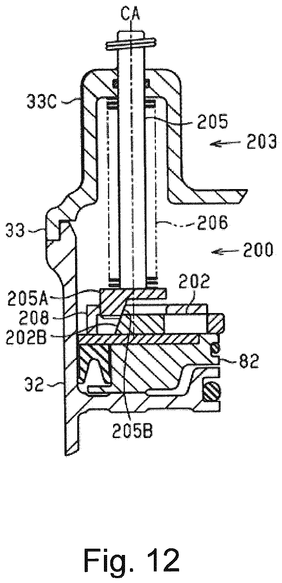

As shown in Fig. 11 and Fig. 12, when the operation part 205 is pulled, the contact part 205A moves in a direction away from the switching member 202. When the contact part 205A moves away from the switching member 202, a contact position between the inclined surface 205B of the contact part 205A and the rear surface 202B of the switching member 202 changes in a direction away from the ring 201. Then, the switching member 202 moves away from the ring 201, and therefore, the engagement part 202A of the switching member 202 no longer engages with the engaged parts 201B of the ring 201, and thus the ring 201 is increased in diameter to decouple the second piston 82 from the transmission member 84, so that an elastic force is no longer transmitted to the transmission member 84.

As described above, according to this embodiment, the following effects can be obtained.
(6) The drive member 203 that moves in a moving direction of the second piston 82 makes contact with the switching member 202 and moves the switching member 202 in a radial direction of the second piston 82, and thus the switching member 202 disengages from the ring 201 so that a braking force of the spring brake 80 is switched to the non-transmission state. Therefore, unlike in the conventional technique, it is not necessary to move the fixing rod in the tangential direction of the fixing ring, thus eliminating the need for a space for protruding outward from the brake cylinder device 60, so that the brake cylinder device 60 can be reduced in size.
(7) The biasing member 206 biases the operation part 205 and the contact part 205A in such a direction that the switching member 202 engages with the ring 201, and thus when the operation part 205 is not operated, the switching member 202 can be maintained at such a position as to engage with the ring 201 by the biasing member 206.

The foregoing embodiments can also be modified as described below.

While in the foregoing first embodiment, the turning shaft 104 is turnable relative to the second piston 82, so that the switching member 102, the turning shaft 104, and the operation part 105 turn integrally with each other, it is also possible that the turning shaft 104 is fixed to the second piston 82, so that the switching member 102 is directly turned by the operation part 105 about the turning shaft 104 as an axis.

While in the foregoing first embodiment, the point of force application is disposed in a direction different from a direction of the point of action relative to the fulcrum, the point of force application may be disposed between the fulcrum and the point of action.

While in the foregoing embodiments, the force-multiplication mechanism 36 is provided as the mediating mechanism, it is also possible to adopt a mediating mechanism that does not multiply a force but merely transmits an elastic force.

In the foregoing embodiments, the transmission member 84 transmits an elastic force acting on the second piston 82 to the spindle 62 via the first piston 71, the force-multiplication mechanism 36, the guide tube 65, the clutch nut 61, and so on. In the foregoing embodiments, the first spring 73 of the regular brake 70 is provided at the guide tube 65, and an elastic force of the first spring 73 is transmitted to the first piston 71 via the guide tube 65 and the force-multiplication mechanism 36. It is, however, also possible that a first spring is provided so that an elastic force of the first spring is directly applied to the first piston 71. For example, the first spring may be provided between the first cylinder 31 and the first piston 71.

While in the foregoing embodiments, the restriction part 101C is provided in the ring 101 and the restriction groove 103 is provided in the second piston 82, the restriction part 101C and the restriction groove 103 may be omitted in a case where rotation of the ring 101 causes no problem.

While in the foregoing embodiments, the ring 101 is used as a coupling member for coupling to the second piston 82 of the spring brake 80, any other member than a ring may also be used as long as the member is capable of coupling to and decoupling from the second piston 82.

While in the foregoing embodiments, the brake cylinder device 60 is applied to the caliper device 20 as a brake device, any other type of brake device than a caliper device may also be used as long as the brake device uses a brake cylinder device.

In the foregoing embodiments, the biasing members 106 and 206 may be omitted.

In the foregoing first embodiment, the turning shaft 104 and the operation part 105 may be omitted.

It should be apparent to those skilled in the art that the present invention may be embodied in many other specific forms without departing from the scope of the invention. For example, one or more of the components may be omitted from the components described in the embodiments (or one or more aspects thereof). Further, components in different embodiments may be appropriately combined. The scope of the invention is only defined by the appended claims.

The present examples and embodiments are to be considered as illustrative and not restrictive, and the invention is not to be limited to the details given herein, but may be modified within the scope and equivalence of the appended claims.

## Claims

1. A brake cylinder device (60) comprising: a spring brake (80); and a coupling part (101) for coupling a transmission part (84) to a piston (82) of the spring brake (80), the transmission part (84) being configured to transmit a force to the spring brake (80); wherein the brake cylinder device (60) further comprises a switching part (102) configured to rotate to disengage from the coupling part (101) so as to switch a braking force of the spring brake (80) to a non-transmission state; and **characterised by** a regular brake (70); the transmission part (84) transmitting power of the piston (82) of the spring brake (80) to a piston (71) of the regular brake (70).

2. The brake cylinder device (60) according to claim 1, further comprising a biasing part (106) for biasing the switching part (102) so that the switching part (102) engages with the coupling part (101) so as to maintain the braking force of the spring brake (80) in a transmission state.

3. The brake cylinder device (60) according to claim 1 or 2, wherein the switching part (102) has a point of action (PA), a fulcrum (PB), and a point of force application (PC), the point of action (PA) being positioned in a portion of the switching part 102) at which the switching part (102) engages with the coupling part (101), the fulcrum (PB) being positioned in a turning shaft (104) of the switching part (102) on which the switching part (102) turns, and the point of force application (PC) being positioned in a portion of the switching part (102) operated for turning, and a second distance (L2) between the fulcrum (PB) and the point of action (PA) is larger than a first distance (L1) between the fulcrum(PB) and the point of force application (PC).

4. The brake cylinder device (60) according to claim 3, wherein the point of force application (PC) is positioned between the fulcrum (PB) and the point of action (PA).

5. The brake cylinder device (60) according to claim 3 or 4, wherein the switching part (102) includes an operation part (105) to be operated, the turning shaft (104) is connected to the piston (82), and the operation part (105) is provided so as to be movable in an axial direction of the turning shaft.

6. A brake cylinder device (60) comprising: a spring brake (80); a coupling part (201) for coupling a transmission part (84) to a piston (82) of the spring brake (80), the transmission part (84) being configured to transmit a force to the spring brake (80); and a switching part (202) configured to move in a radial direction of the piston (82) to disengage from the coupling part (201) so as to switch a braking force of the spring brake (80) to a non transmission state; and **characterised by** a drive part (203) configured to move in an axial direction parallel to a moving direction of the piston (82) so as to make contact with the switching part (202) and move the switching part (202).

7. The brake cylinder device (60) according to claim 6, further comprising: a biasing part (204) for biasing the drive part (203) so that the switching part (202) engages with the coupling part (201) so as to maintain the braking force of the spring brake (80) in a transmission state.

8. A brake device (20) configured to generate a braking force by pressing a brake friction member against a pressed member, the brake device (20) comprising: the brake cylinder device (60) according to any one of claims 1 to 7, wherein the brake friction member is driven by the brake cylinder device (60).

## Patentansprüche

1. Bremszylindervorrichtung (60), die eine Federspeicherbremse (80) und einen Kopplungsteil (101) zum Koppeln eines Übertragungsteils (84) mit einem Kolben (82) der Federspeicherbremse (80) umfasst, wobei der Übertragungsteil (84) so ausgeführt ist, dass er eine Kraft auf die Federspeicherbremse (80) überträgt, und die Bremszylindervorrichtung (60) des Weiteren einen Umschaltteil (102) umfasst, der so ausgeführt ist, dass er sich dreht, um sich von dem Kopplungsteil (101) zu lösen und eine Bremskraft der Federspeicherbremse (80) auf einen Nicht-Übertragungszustand umzuschalten, und **gekennzeichnet durch** eine reguläre Bremse (70), wobei der Übertragungsteil (84) Kraft des Kolbens (82) der Federspeicherbremse (80) auf einen Kolben (71) der regulären Bremse (70) überträgt.

2. Bremszylindervorrichtung (60) nach Anspruch 1, die des Weiteren einen Vorspannteil (106) umfasst, mit dem der Umschaltteil (102), so vorgespannt wird, dass der Umschaltteil (102) mit dem Kopplungsteil (101) in Eingriff kommt, um die Bremskraft der Federspeicherbremse (80) in einem Übertragungszustand zu halten.

3. Bremszylindervorrichtung (60) nach Anspruch 1 oder 2, wobei der Umschaltteil (102) einen Angriffspunkt (PA), einen Drehpunkt (PB) sowie einen Kraftangriffspunkt (PC) aufweist, der Angriffspunkt (PA) in einem Abschnitt des Umschaltteils (102) positioniert ist, an dem der Umschaltteil (102) mit dem Kopplungsteil (101) in Eingriff kommt, der Drehpunkt (PB) in einer Drehwelle (104) des Umschaltteils (102) positioniert ist, an der sich der Umschaltteil (102) dreht, und der Kraftangriffspunkt (PC) in einem Abschnitt des Umschaltteils (102) positioniert ist, der zum Drehen betätigt wird, und ein zweiter Abstand (L2) zwischen dem Drehpunkt (PB) und dem Angriffspunkt (PA) größer ist als ein erster Abstand (L1) zwischen dem Drehpunkt (PB) und dem Kraftangriffspunkt (PC).

4. Bremszylindervorrichtung (60) nach Anspruch 3, wobei der Kraftangriffspunkt (PC) zwischen dem Drehpunkt (PB) und dem Angriffspunkt (PA) positioniert ist.

5. Bremszylindervorrichtung (60) nach Anspruch 3 oder 4, wobei der Umschaltteil (102) einen zu betätigenden Betätigungsteil (105) enthält, die Drehwelle (104) mit dem Kolben (82) verbunden ist und der Betätigungsteil (105) so eingerichtet ist, dass er in einer axialen Richtung der Drehwelle bewegt werden kann.

6. Bremszylindervorrichtung (60), die eine Federspeicherbremse (80), einen Kopplungsteil (201) zum Koppeln eines Übertragungsteils (84) mit einem Kolben (82) der Federspeicherbremse (80) umfasst, wobei der Übertragungsteil (84) so ausgeführt ist, dass er eine Kraft auf die Federspeicherbremse (80) überträgt, sowie einen Umschaltteil (202) umfasst, der so ausgeführt ist, dass er sich in einer radialen Richtung des Kolbens (82) bewegt, um sich von dem Kopplungsteil (201) zu lösen und eine Bremskraft der Federspeicherbremse (80) auf einen Nicht-Übertragungszustand umzuschalten, und **gekennzeichnet durch** einen Antriebsteil (203), der so ausgeführt ist, dass er sich in einer axialen Richtung parallel zu einer Bewegungsrichtung des Kolbens (82) bewegt, um Kontakt mit dem Umschaltteil (202) herzustellen und den Umschaltteil (202) zu bewegen.

7. Bremszylindervorrichtung (60) nach Anspruch 6, die des Weiteren einen Vorspannteil (204) umfasst, mit dem der Antriebsteil (203) so vorgespannt wird, dass der Umschaltteil (202) mit dem Kopplungsteil (201) in Eingriff kommt, um die Bremskraft der Federspeicherbremse (80) in einem Übertragungszustand zu halten.

8. Bremsvorrichtung (20), die so ausgeführt ist, dass sie eine Bremskraft durch Pressen eines Brems-Reibungselementes an ein gepresstes Element erzeugt, wobei die Bremsvorrichtung (20) die Bremszylindervorrichtung (60) nach einem der Ansprüche 1 bis 7 umfasst und das Brems-Reibungselement durch die Bremszylindervorrichtung (60) angetrieben wird.

## Revendications

1. Dispositif de cylindre de frein (60) comprenant : un frein à ressort (80) ; et une partie d'accouplement (101) pour coupler une partie de transmission (84) à un piston (82) du frein à ressort (80), la partie de transmission (84) étant configurée pour transmettre une force au frein à ressort (80) ; dans lequel le dispositif de cylindre de frein (60) comprend en outre une partie de commutation (102) configurée pour tourner pour se désengager de la partie d'accouplement (101) de manière à commuter une force de freinage du frein à ressort (80) vers un état de non-transmission ; et **caractérisé par** un frein ordinaire (70) ; la partie de transmission (84) transmettant la puissance du piston (82) du frein à ressort (80) à un piston (71) du frein ordinaire (70).

2. Dispositif de cylindre de frein (60) selon la revendication 1, comprenant en outre une partie de sollicitation (106) pour solliciter la partie de commutation (102) de sorte que la partie de commutation (102) s'engage avec la partie d'accouplement (101) de manière à maintenir la force de freinage du frein à ressort (80) dans un état de transmission.

3. Dispositif de cylindre de frein (60) selon la revendication 1 ou 2, dans lequel la partie de commutation (102) a un point d'action (PA), un point d'appui (PB) et un point d'application de force (PC), le point d'action (PA) étant positionné dans une portion de la partie de commutation (102) au niveau de laquelle la partie de commutation (102) s'engage avec la partie d'accouplement (101), le point d'appui (PB) étant positionné dans un arbre tournant (104) de la partie de commutation (102) sur laquelle tourne la partie de commutation (102), et le point d'application de force (PC) étant positionné dans une portion de la partie de commutation (102) actionnée pour tourner, et une deuxième distance (L2) entre le point d'appui (PB) et le point d'action (PA) est plus grande qu'une première distance (L1) entre le point d'appui (PB) et le point d'application de force (PC).

4. Dispositif de cylindre de frein (60) selon la revendication 3, dans lequel le point d'application de force (PC) est positionné entre le point d'appui (PB) et le point d'action (PA).

5. Dispositif de cylindre de frein (60) selon la revendication 3 ou 4, dans lequel la partie de commutation (102) comporte une partie d'actionnement (105) à actionner, l'arbre tournant (104) est relié au piston (82), et la partie d'actionnement (105) est prévue de manière à être mobile dans une direction axiale de l'arbre tournant.

6. Dispositif de cylindre de frein (60) comprenant : un frein à ressort (80) ; une partie d'accouplement (201) pour coupler une partie de transmission (84) à un piston (82) du frein à ressort (80), la partie de transmission (84) étant configurée pour transmettre une force au frein à ressort (80) ; et une partie de commutation (202) configurée pour se déplacer dans une direction radiale du piston (82) pour se désengager de la partie d'accouplement (201) de manière à commuter une force de freinage du frein à ressort (80) vers un état de non-transmission ; et **caractérisé par** une partie d'entraînement (203) configurée pour se déplacer dans une direction axiale parallèle à une direction de déplacement du piston (82) de manière à entrer en contact avec la partie de commutation (202) et déplacer la partie de commutation (202).

7. Dispositif de cylindre de frein (60) selon la revendication 6, comprenant en outre : une partie de sollicitation (204) pour solliciter la partie d'entraînement (203) de sorte que la partie de commutation (202) s'engage avec la partie d'accouplement (201) de manière à maintenir la force de freinage du frein à ressort (80) dans un état de transmission.

8. Dispositif de frein (20) configuré pour générer une force de freinage en pressant un élément de friction de frein contre un élément pressé, le dispositif de frein (20) comprenant : le dispositif de cylindre de frein (60) selon l'une quelconque des revendications 1 à 7, dans lequel l'élément de friction de frein est entraîné par le dispositif de cylindre de frein (60).
